# EUROPEAN PATENT APPLICATION

(11) **EP 4 682 705 A1**
(43) Date of publication of application: **21.01.2026**
(21) Application number: 24189718.0
(22) Date of filing: 19.07.2024
(51) Int. Cl.: G06F 3/14

(54) **METHOD AND SYSTEM FOR SECURELY MIRRORING HMI SCREEN FROM A FIRST HMI DEVICE TO A SECOND HMI DEVICE**

(71) Applicant: Siemens Aktiengesellschaft, 80333 München (DE)
(72) Inventor: Tripathi, Utkarsh, 226016 Lucknow, Uttar Pradesh (IN); Bhamidipati, Suryanarayana, 560066 Bangalore, Karnataka (IN); Deoka, Chetan Sharad, 560076 Bangalore (IN)
(74) Representative: Isarpatent

(57) **Abstract**

The present invention provides a system (100), apparatus (110) and method (400) for securely mirroring HMI screen from a first HMI device to a second HMI device for remote assistance in a technical installation, the method comprising initiating, by a processing unit, a sniffing technique when a display command is sent to a display driver to draw one or more elements on the HMI screen of the first HMI device, sniffing display commands from the transmission between the display controller and the display driver of the first HMI device, converting the display commands to slugs by serializing the display commands of the first HMI device, transmitting the slugs from the first HMI device to the second HMI device, deserializing the slugs into display commands for the second HMI device, and displaying the one or more elements in the second HMI device based on the received display commands.

## Description

The present invention generally relates to remote assistance systems, and more specifically to a method and system for securely mirroring HMI screen from a first HMI device to a second HMI device for remote assistance.

Currently, modern factories are completely automated using industrial automation control systems. These automation control systems generally include a plurality of Input/Output (I/O) modules, engineering stations, Programmable logic Controllers (PLCs) and sensors all connected with each other using network technologies such as Ethernet, ControlNet, DeviceNet, FOUNDATION Fieldbus, PROFIBUS or other network protocols. The Human-Machine Interface (HMI) devices enable human interaction with the automation system at various sites in the factory. The HMI screens display real-time values measured at the process or equipment associated with an industrial automation environment. The HMI screens may display graphical objects associated with the processes taking place in the automation environment. For example, the HMI screens may display the process variables which are exceeding a predefined threshold and trigger an alarm.

The HMI screens may need to be accessed from constrained or remote places. The HMI devices maybe installed in a location with limited accessibility, such as a basement or a factory setting, thereby making the accessibility to the HMIs difficult. As an example, most boiler units have an HMI located on the front fascia of the body. These boilers are typically installed in a location where plumbing is accessible, such as the basement or in a kitchen closet. This often results in the heat-pumps being placed in an unfavorable location for the users needing to access the HMI. This makes making changes to parameters on the boiler system difficult for the operator. Moreover, a commissioning engineer often must spend a lot of time in such a location. This may not only be a discomfort, but also a safety hazard if the location is not well-ventilated.

In light of the above, there exists a need to provide a method and system for securely mirroring HMI screen from a first HMI device to a second HMI device for remote assistance for resource constrained HMI.

Therefore, the object of the invention is to provide a system and method for securely mirroring HMI screen from a first HMI device to a second HMI device for remote assistance in a technical installation.

Throughout the present disclosure, the term "technical installation" may refer to plurality of assets connected with each other to achieve a function. The technical installation may be comprised of industrial assets such as industrial machines, industrial devices, industrial controllers, and so forth. Such assets in the technical installation having an HMI associated with the assets such as any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. Example HMI screens further include, without limitation, PC-based panels and high-resolution displays (e.g., televisions) associated with Supervisory Control and Data Acquisition (SCADA) servers, health management systems (HMIS, CNC machines, HVAC systems, and the like. In context of the present invention, in one particular scenario, the first HMI device is installed in a resource constrained environment such HMIs installed in chemical plants, nuclear plants, oil & gas refineries, boiler systems, remote areas with low connectivity or bandwidth, etc.

Throughout the present disclosure, the term "first HMI or first human machine interface" refers to a panel having one or more physical displays. Thus, unless otherwise specified, display, screen, and panel may be used interchangeably herein, without limitation. A given HMI screen may define a small text-based display or a large panel having key or touch support.

In industrial settings, HMIs are used to visually display data, track production time, monitor machine inputs and outputs, and oversee key performance indicators (KPIs). Essentially, HMls provide insight into mechanical performance and progress pertaining to assets in the technical installation. Such assets in the technical installation having an HMI associated with the assets such as any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. Example HMI screens further include, without limitation, PC-based panels and high-resolution displays (e.g., televisions) associated with Supervisory Control and Data Acquisition (SCADA) servers, health management systems (HMIS, CNC machines, HVAC systems, and the like. In context of the present invention, in one particular scenario, the first HMI device is installed in a resource constrained environment such HMIs installed in chemical plants, nuclear plants, oil & gas refineries, boiler systems, remote areas with low connectivity or bandwidth, etc.

Throughout the present disclosure, the term "second HMI or human machine interface" refers to a virtual user interface or dashboard that connects a user or operator to a machine, system, or device through virtual means. Unlike physical HMIs (such as touchscreens or control panels), virtual HMls exist in digital space and allow users to interact remotely with industrial processes or equipment. These interfaces provide real-time access to process data, configuration settings, and system monitoring. Users/operators can make interface changes dynamically, and access can be restricted based on user privileges.

In context of the present invention, in a particular scenario, the second HMI or the virtual HMI is hosted in a virtual environment or a computer simulated environment. Throughout the present disclosure, the term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be a digital twin or a plurality of digital twins in the computer simulated collaborative environment or metaverse.

The metaverse can be realized by a hosting environment. The hosting environment can be for example be implemented as a cloud environment, an edge-cloud environment and/or on specific devices, e.g., mobile devices.

The method comprises initiating, by a processing unit, a sniffing technique when a display command is sent to a display driver to draw one or more elements on the HMI screen of the first HMI device.

In an embodiment, the first HMI device is a physical HMI device, and the second HMI device is a virtual HMI device.

In an embodiment, the one or more elements are primitive elements including at least one of: draw a rectangle, draw a circle, draw an image, and draw text at some pixel coordinates.

The method comprises sniffing the display commands from the transmission between the display controller and the display driver of the first HMI device.

The method comprises converting the display commands to slugs by serializing the display commands of the first HMI device.

In an embodiment, the method of serializing the display commands comprises converting the display commands into a byte stream.

The method comprises transmitting the slugs from the first HMI device to the second HMI device.

In an embodiment, the method of transmitting the slugs from the first HMI device to the second device further comprises encrypting the slugs at the first HMI device, and decrypting the slugs at the second HMI device.

The method comprises de-serializing the slugs into display commands for the second HMI device.

In an embodiment, the method of deserializing the slugs comprises converting the slugs into interpretations used as display commands at the second HMI device.

In an embodiment, the slugs are stored in a memory associated with the first HMI device and/or the second HMI device, wherein the slugs can be de-serialized in order to reconstruct a workflow of the first HMI device at a later point in time.

The method comprises displaying the one or more elements in the second HMI device based on the received display commands.

In an embodiment, the method further comprises detecting an input on the first HMI device from a user; and sniffing and transmitting the input to the second HMI device in real-time.

In an embodiment, the method further comprises sniffing and transmitting one or more inputs on the second HMI device to the first HMI device.

The object of the invention is also achieved by an apparatus for securely mirroring HMI screen from a first HMI device to a second HMI device for remote assistance in a technical installation. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for securely mirroring HMI screen from a first HMI device to a second HMI device for remote assistance in a technical installation. The system comprises a first HMI device and a second HMI device. The system further comprises the apparatus as mentioned above. The apparatus is communicatively coupled to the first HMI device and the second HMI device. The apparatus is configured for securely mirroring HMI screen from a first HMI device to a second HMI device for remote assistance in a technical installation according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: is a block diagram of a system for securely mirroring HMI screen from a first HMI device to a second HMI device for remote assistance in a technical installation, according to an embodiment of the present invention;
- FIG 2: is a block diagram of an apparatus for securely mirroring HMI screen from a first HMI device to a second HMI device for remote assistance in a technical installation, according to an embodiment of the present invention;
- FIG 3: is a flowchart depicting steps of a method for securely mirroring HMI screen from a first HMI device to a second HMI device for remote assistance in a technical installation, according to an embodiment of the present invention;
- FIG 4: is an exemplary method workflow of the system of FIG. 1, according to an embodiment of the present invention; and
- FIG 5: is an exemplary block diagram of an implementation of the system of FIG 1, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

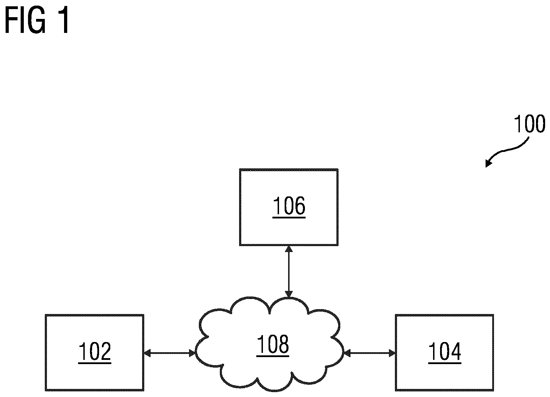

FIG 1 is a block diagram of a system 100 for securely mirroring HMI screen from a first HMI device to a second HMI device for remote assistance in a technical installation, according to an embodiment of the present invention. The system 100 comprises a first HMI device 102, a second HMI device 104, and an apparatus 106 communicating over a communication network 108.

Throughout the present disclosure, the term "first HMI or first human machine interface" refers to a panel having one or more physical displays. Thus, unless otherwise specified, display, screen, and panel may be used interchangeably herein, without limitation. A given HMI screen may define a small text-based display or a large panel having key or touch support.

In industrial settings, HMIs are used to visually display data, track production time, monitor machine inputs and outputs, and oversee key performance indicators (KPIs). Essentially, HMls provide insight into mechanical performance and progress pertaining to assets in the technical installation. Such assets in the technical installation having an HMI associated with the assets such as any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. Example HMI screens further include, without limitation, PC-based panels and high-resolution displays (e.g., televisions) associated with Supervisory Control and Data Acquisition (SCADA) servers, health management systems (HMIS, CNC machines, HVAC systems, and the like. In context of the present invention, in one particular scenario, the first HMI device is installed in a resource constrained environment such HMIs installed in chemical plants, nuclear plants, oil & gas refineries, boiler systems, remote areas with low connectivity or bandwidth, etc.

Throughout the present disclosure, the term "second HMI or human machine interface" refers to a virtual user interface or dashboard that connects a user or operator to a machine, system, or device through virtual means. Unlike physical HMIs (such as touchscreens or control panels), virtual HMls exist in digital space and allow users to interact remotely with industrial processes or equipment. These interfaces provide real-time access to process data, configuration settings, and system monitoring. Users/operators can make interface changes dynamically, and access can be restricted based on user privileges.

In context of the present invention, in a particular scenario, the second HMI or the virtual HMI is hosted in a virtual environment or a computer simulated environment. The term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be, for example, a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The metaverse may comprise a plurality of computer-simulated components. The computer simulated components can, for example, be understood as a representation, in particular, a 3D representation, of a real or physical component. A component can, for example, be a room, a building, an item, or an object. The computer-simulated component can have different functionalities/features, e.g., an access interface. The computer-simulated component further comprises data that are component-specific, e.g., sensor data of a virtual sensor, that can be retrieved, for example, via the access interface. An access to a computer-simulated component can, for example, comprise usage, modification, connection to other computer-simulated components, etc. The computer-simulated component can interact with the computer-simulated environment. For the purpose of the present invention, the industrial metaverse can host plurality of HMI displays for remote display and remote assistance.

The metaverse can be realized by a hosting environment. The hosting environment can be, for example, be implemented as a cloud environment, an edge-cloud environment and/or on specific devices, e.g., mobile devices.

The first HMI device 102 and the second HMI device 104 are communicatively coupled to the apparatus 106 via communication network 108. The communication network 108 refers to a system that allows two or more entities (such as computers, mobile devices, loT devices, etc.) to exchange information or data. This system can include various types of connections, including wired or wireless links, routers, switches, and other networking devices. The network can support various protocols and standards to facilitate communication, such as TCP/IP, Ethernet, Wi-Fi, Bluetooth, and others. The communication network 108 ensures a secure connection between the first HMI device and the second HMI device. Furthermore, the communication network 108 ensures that the first HMI device and the second HMI device are communicatively coupled with each other even in bandwidth constrained environments.

It is to be understood that the mirroring of screens from first HMI device to second HMI device is essential in resource constrained environments. Herein, the screen mirroring technology is a technique for transmitting an image displayed on a current screen in one device (a source device, for example, the first HMI device) to other device (sink device, for example, the second HMI device) without any change between two devices having an image display function. In an example, the screen mirroring of HMI devices during commissioning stage of the devices in the plant results is time efficient and convenient for plant operators and commissioning engineers. Often, configuration on the HMI depends on the configuration of rest of the components of the plant. It becomes imperative for the commissioning engineer to access and inspect other components connected to the plant along with the HMI. The present invention provides a system that enables the service engineers can not only access the plant and its components, but also the HMI in a two-way communication to not only inspect it, but even complete the commissioning process from a remote location within the metaverse. This process provides a lot of advantages over the current process of the commissioning engineers going to customer sites and doing the commissioning on-site. Firstly, it reduces the time to commissioning, as the engineers do not have to go to the site anymore, they can be commissioned from a remote location. Additionally, it also increases the number of commissions that can be performed in a single day as the commissioning engineers now can commission plants from a single remote location, the number of commissioning per day also increases. Finally, it reduces job fatigue for the engineers, as they can perform commissions from a comfortable location, rather than a hazardous location like a factory floor.

In one embodiment, the apparatus 106 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 106 may include a module for securely mirroring images from the first HMI device 102 to the second HMI device 104.

Particularly, the system 100 comprises a cloud computing device configured for securely mirroring HMI screen from a first HMI device 102 to a second HMI device 104 for remote assistance in a technical installation. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

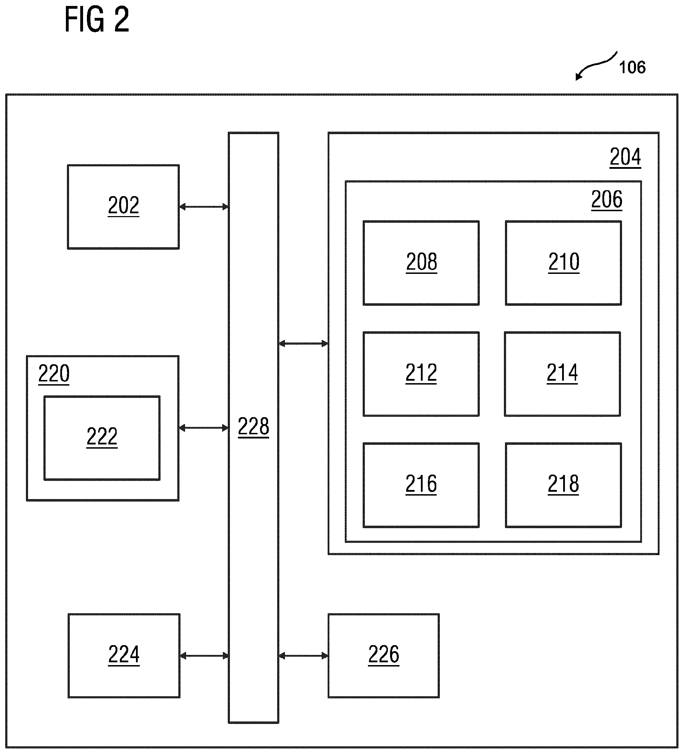

FIG 2 is a block diagram of an apparatus for securely mirroring HMI screen from a first HMI device to a second HMI device for remote assistance in a technical installation, according to an embodiment of the present invention. The apparatus 106 may be a personal computer, a laptop computer, a tablet, a server, a virtual machine, and the like. The apparatus 106 includes a processing unit 202, a memory 204 comprising a module 206, a storage unit 220 comprising a database 222, an input unit 224, an output unit 226 and a bus 228.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 204 may be non-transitory volatile memory and/or non-volatile memory. The memory 204 may be coupled for communication with the processing unit 202, such as being a computer-readable storage medium. The processing unit 202 may execute instructions and/or code stored in the memory 204. A variety of computer-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes the module 206 stored in the form of machine-readable instructions on any of the above-mentioned storage media and may be in communication to and executed by the processing unit 202. When the machine-readable instructions are executed by the processing unit 202, the module 206 causes the processing unit 202 to securely mirroring HMI screen from a first HMI device to a second HMI device for remote assistance in a technical installation.

The module 206 further comprises sniffing module 208, serializing module 210, deserializing module 212, encryption module 214, decryption module 216, and transmission module 218.

The sniffing module 208 is configured for executing a sniffing technique when a display command is sent to a display driver to draw one or more elements on the HMI screen of the first HMI device. The sniffing module 208 is configured for sniffing the display commands from the transmission between the display controller and the display driver of the first HMI device.

The serializing module 210 is configured for converting the display commands to slugs by serializing the display commands of the first HMI device.

The de-serializing module 212 is configured for de-serializing the slugs into display commands for the second HMI device.

The encryption module 214 is configured for encrypting the slugs for transmitting the same from the first HMI device to the second HMI device.

The decryption module 216 is configured for decrypting the slugs into display commands at the second HMI device.

Thet transmission module 218 is configured for transmitting the slugs from the first HMI device to the second HMI device.

The processing unit 202 is configured for performing all the functionality of the module 206 for securely mirroring HMI screen from a first HMI device to a second HMI device for remote assistance in a technical installation. The processing unit 202 is configured to initiate a sniffing technique when a display command is sent to a display driver to draw one or more elements on the HMI screen of the first HMI device. The processing unit 202 is configured to sniffing the display commands from the transmission between the display controller and the display driver of the first HMI device. The processing unit 202 converting the display commands to slugs by serializing the display commands of the first HMI device. The processing unit 202 transmitting the slugs from the first HMI device to the second HMI device. The processing unit 202 is configured to de-serializing the slugs into display commands for the second HMI device. The processing unit 202 is configured to display the one or more elements in the second HMI device based on the received display commands.

The storage unit 220 comprises the database 222 for storing slugs and corresponding interpretation of the slugs. The storage unit 220 and/or database 222 may be provided using various types of storage technologies, such as solid-state drives, hard disk drives, flash memory, and may be stored in various formats, such as relational databases, non-relational databases, flat files, spreadsheets, and extended markup files, etc.

The input unit 224 may provide ports to receive input from the first HMI device and /or the second HMI device. The display unit 226 may provide ports to output data via output device with a graphical user interface for displaying the one or more elements transmitted as slugs on the first HMI device and/or the first HMI device. The bus 228 acts as interconnect between the processing unit 202, the memory 204, the storage unit 220, the input unit 224, and the display unit 226.

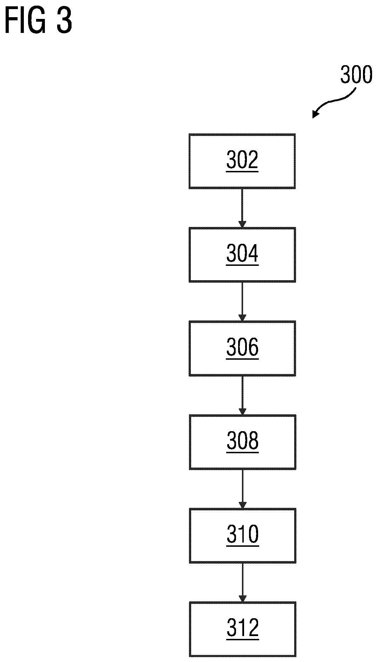

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

FIG 3 is a flowchart depicting steps of a method 300 for securely mirroring HMI screen from a first HMI device to a second HMI device for remote assistance in a technical installation.

At step 302, a sniffing technique is initiated when a display command is sent to a display driver to draw one or more elements on the HMI screen of the first HMI device. Throughout the present disclosure, the term "first HMI or first human machine interface" refers to a panel having one or more physical displays. Thus, unless otherwise specified, display, screen, and panel may be used interchangeably herein, without limitation. A given HMI screen may define a small text-based display or a large panel having key or touch support. Throughout the present disclosure, the term "second HMI or human machine interface" refers to a virtual user interface or dashboard that connects a user or operator to a machine, system, or device through virtual means. Unlike physical HMIs (such as touchscreens or control panels), virtual HMls exist in digital space and allow users to interact remotely with industrial processes or equipment. These interfaces provide real-time access to process data, configuration settings, and system monitoring. Users/operators can make interface changes dynamically, and access can be restricted based on user privileges. In an embodiment, the first HMI device is a physical HMI device, and the second HMI device is a virtual HMI device. In an example, the first HMI device is installed in a resource constrained environment such HMIs installed in chemical plants, nuclear plants, oil & gas refineries, boiler systems, remote areas with low connectivity or bandwidth, etc. In an example, the second HMI device is a virtual HMI device in a simulation environment.

When a display command is sent to a display driver to draw one or more elements on the HMI screen of the first HMI device, sniffing of the display commands is initiated. "Sniffing technique" refers to the process of intercepting or monitoring the commands sent between a computer system (such as a server or a client device) and a display device (such as a monitor or a screen). This can be done using specialized software or hardware tools designed to capture and analyze the data transmitted over the communication channel between the computer and the display. The display commands are sniffed when the display driver sends the commands to draw one or more elements on the HMI screen. There are several methods by which sniffing of the display commands can be done. In an example, hardware-based sniffers can be used for sniffing the display commands. The hardware-based sniffers such as display port/HDMI/DP++ analyzers are dedicated hardware devices that connect between the computer (or graphics card or the display driver) and the display device (such as the HMI screen). They capture the data transmitted over DisplayPort, HDMI, or DP++ (a combination of DisplayPort and HDMI) interfaces. They can decode the packets and commands exchanged between the computer and the display device.

In another example, the software-based sniffers are used to sniff display commands. Packet sniffers such as tools like Wireshark, Microsoft Network Monitor, or tcpdump can capture packets on a network, including packets related to display commands if the communication is over a network protocol. Also, display debugging tools provided by graphics card manufacturers or operating systems allow developers and technicians to monitor and log display commands.

In another example, embedded system debugging tools are used to sniff display commands. Debuggers can sometimes be used to monitor and debug display-related commands directly from the graphics processing unit (GPU) or system-on-chip (SoC) to the display interface.

In another example, sniffing of display commands can be done using proxy servers or middleboxes where display commands are transmitted over a network protocol (such as remote display technologies like VNC or RDP), proxy servers or middleboxes can intercept and analyze the data packets containing display commands.

In another example, emulation or virtualization platforms can be used to sniff display commands in virtual environments. For example, the virtualization platforms provide tools for monitoring and debugging virtual display interfaces. These tools can capture and analyze the commands sent between the virtual machine and the virtual display. Such a sniffing technique is used for sniffing commands from the second HMI device or the virtual HMI.

Throughout the present disclosure, the term "display commands" refers to instructions or data sent from display driver to a display device (such as HMI screen) to control its output or behavior. These commands are typically part of the communication protocol between the computer's graphics subsystem and the display hardware, ensuring correct rendering of visuals on the screen. These commands are essential for ensuring that the display device correctly interprets and renders the content sent from the computer system, providing users with the intended visual output and functionality. They are typically managed and transmitted through hardware-specific interfaces (e.g., DisplayPort, HDMI) or software APIs provided by the operating system or graphics driver. Some examples of display commands are resolution setting commands, refresh rate commands, color depth commands, brightness and contrast commands, gamma correction commands, rotation and orientation commands, cursor and pointer commands, overlay and layer commands, etc.

Throughout the present disclosure, the term "one or more elements" refers to graphic elements that need to be drawn or displayed on the screen. In an embodiment, the one or more elements are primitive elements including at least one of: draw a rectangle, draw a circle, draw an image, and draw text at some pixel coordinates.

Any of the chosen sniffing technique as described above is initiated when the display commands are generated to be sent to the display driver.

At step 304, the display commands are sniffed from the transmission between the display controller and the display driver of the first HMI device. The display controller is configured for managing the display of visual content on the HMI screen. The display controller serves as an interface between the computer's graphics subsystem (which generates the visual content) and the display device (such as an LCD panel, CRT monitor, or projector, or the HMI screen in this scenario). The display controller is configured for signal generation, data processing, timing control, display management, interface handling etc. The display driver facilitates communication between the operating system, graphics hardware (such as a graphics processing unit or GPU), and the display device (such as the HMI screen). The primary function of the display driver is to translate generic commands from the operating system into specific commands that the graphics hardware can understand and execute to control the display device effectively. Therefore, the display commands are sniffed from the transmission between the display controller and the display driver of the first HMI device.

At step 306, the display commands are converted into slugs by serializing the display commands of the first HMI device sniffed from the transmission between the display controller and the display driver of the first HMI device. The term "slugs" can be understood as a schema for representing display commands into a byte stream.

In an embodiment, the method of serializing the display commands comprises converting the display commands into a byte stream. By "serializing display commands" is referred to as process of converting display commands into a format suitable for transmission in an efficient and reliable manner. The display commands are serialized into a byte stream which can be transmitted efficiently in bandwidth constraint environments.

In an example, the C++ API (Application Programming Interface) which are the display commands for the HMI device, and its corresponding slugs (text strings) is shown in Table 1 below:

**Table 1**

| **C₊₊ API** | **Slugs** |
|---|---|
| void Drawlmage(Bitmap, const Pos); | ~#I#422#10#5890659#45#45# |
| void DrawRectangle(Area, Color); | ~#R#0#0#480#62#dcdcdc# |
| void DrawLine(Pos, const Pos&, Color); | ~#L#0#0#480#62#dcdcdc# |
| void DrawCircle(Pos, Radius, Color, Color); | ~#C#20#30#10##a0a0a0#dcdcdc# |
| void DrawText(String, TextFormatting, Pos); | ~#T#20#23#Menu#20#505050# |
| void Refresh(); | ~#S# |

At step 308, the slugs are transmitting the first HMI device to the second HMI device. The transmission of the slugs is carried out over the communication network 108. In an embodiment, the method of transmitting the slugs from the first HMI device to the second device further comprises encrypting the slugs at the first HMI device and decrypting the slugs at the second HMI device. For the brevity of the disclosure, the methods of encryption and decryption are not explained in detail here as it is known in the art.

At step 310, the slugs are de-serialized into display commands for the second HMI device. In an embodiment, the method of deserializing the slugs comprises converting the slugs into interpretations used as display commands at the second HMI device. By "deserializing display commands" is referred to as process of converting the byte stream into an interpretable format for recreating the one or more elements on the second HMI device.

In an example, the C++ API (Application Programming Interface) which are the display commands for the HMI device, and its corresponding slugs (text strings) and their interpretations are shown in Table 2 below:

**Table 2**

| **C₊₊ API** | **Slug** | **Interpretation** |
|---|---|---|
| void Drawlmage(Bitmap, con st Pos); | ~#I#422#10#5890659#45#45# | Image at (422, 10) |
| void DrawRectangle(Area, Color); | ~#R#0#0#480#62#dcdcdc# | Rectangle enclosing (0,0) and (480,62) |
| void DrawLine(Pos, const Pos&, Color); | ~#L#0#0#480#62#dcdcdc# | Line connecting (0,0) and (480,62) |
| void DrawCircle(Pos, Radius, Color, Color); | ~#C#20#30#10##a0a0a0#dcdcdc# | Circle at (20,30) and radius 10 |
| void DrawText(String, TextFormatting, Pos); | ~#T#20#23#Menu#20#505050# | Grey text at (20, 23), size 20 |
| void Refresh(); | ~#S# | Refresh the image |

In an embodiment, the slugs are stored in a memory associated with the first HMI device and/or the second HMI device, wherein the slugs can be de-serialized in order to reconstruct a workflow of the first HMI device at a later point in time. In an example, the display commands sniffed from the first HMI device are converted into slugs and transmitted to the second HMI device. The second HMI device is configured to store these slugs in the memory so that the workflow of screens and inputs can be recreated at the second HMI device when requested by the user.

At step 312, the one or more elements are displayed in the second HMI device based on the received display commands. The one or more elements that are transmitted as slugs from the first HMI device are displayed in the second HMI device in real-time. In an embodiment, the method further comprises detecting an input on the first HMI device from a user; and sniffing and transmitting the input to the second HMI device in real-time. In an example, the input is a touch input on the first HMI device, such as selecting an icon, entering a value, zooming in, zooming out, de-selecting an icon, etc. All these inputs are sniffed from the display controller of the first HMI device and then mirrored on the second HMI device in real time.

In an embodiment, the method further comprises sniffing and transmitting one or more inputs on the second HMI device to the first HMI device. It is to be understood that the above explained method steps can be similarly implemented from the second HMI device to the first HMI device. Beneficially, such a functionality ensures that the first HMI device can be controlled and operated from a virtual HMI device. The invention enables remote assistance for plant operators using a virtual HMI device.

In a manner similar to transmission of slug packets, the second HMI device or the virtual screen can receive inputs from the virtual users and serialize them as input slugs and transmit them to the first HMI device or the local device. The local device can de-serialize the slugs and extract input commands which can call the input API with appropriate arguments. For instance, a touchscreen interface can accept the x and y coordinates.

In the first HMI device or the local screen, the API is as follows:
void onTouchEvent(unsigned x, unsigned y);

The corresponding slug prints from the second HMI device or virtual screen is as follows:
~#P#20#30# // <- Touch point at coordinate (20, 30)

Moreover, the input can be virtual haptic feedback to the remote operator for a more immersive experience.

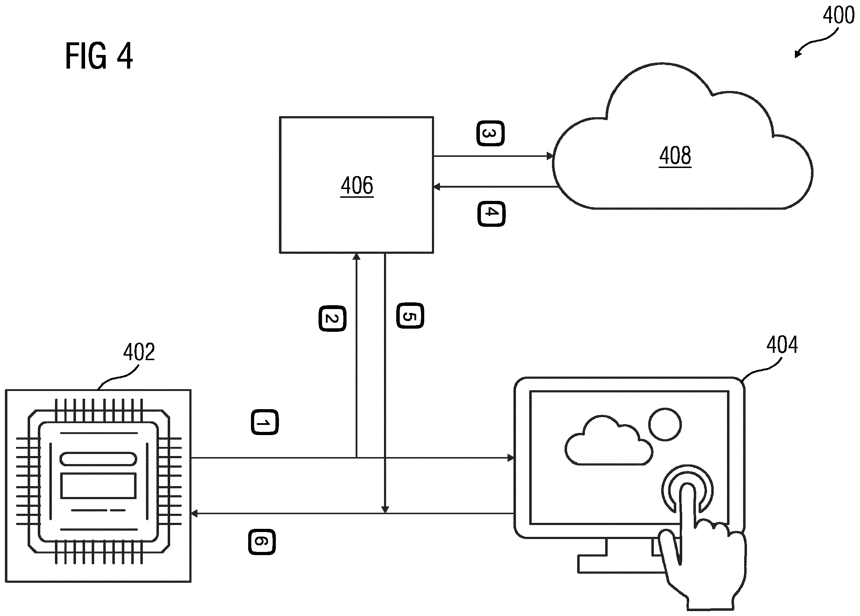

FIG 4 is an exemplary method workflow 400 illustrating the sniffing technique, according to an embodiment of the present invention. The sniffing technique and transmission of slugs is further explained with the help of system components illustrated in FIG 4. The system components are a display controller 402, first HMI device or the local HMI device 404 containing the display driver, serializer-deserializer module 406, and a communication network or relay server 408. At step (1), the display controller 402 sends display commands to the local HMI device 404. The display commands are one or more primitive elements. Examples of these primitives are - draw a rectangle, draw a circle, draw an image, and draw text at some pixel coordinates. At step (2), the display commands are sniffed from the transmission between the display controller 402 and the local HMI device 404 using the serializer-deserializer module 406 and serializes the display commands into slugs. At step (3), the serializer-deserializer module 406 transmits the slugs into the relay server 408 and subsequently to a virtual HMI device (not shown). At step (4), input is received from the virtual HMI device through the relay server 408. The input is sniffed from the virtual HMI device and then received by the serializer-deserializer module 406. At step (5), the serializer-deserializer module 406 deserializes the received input from the relay server 408 and then injects the interpreted commands into the transmission between display controller 402 and the local HMI device 404. At step (6), the inputs received is mirrored on the local HMI device 404. Therefore, enabling remote operation of the local HMI device 404.

In an exemplary implementation, an image is created on the local display when the controller on the local device sends a series of commands to the local display driver. This is the default operation which generally happens in an HMI or an embedded system. The scheme presented here adds a layer to sniff these commands and serializes them in the form of slugs (text strings). These slugs are relayed through the relay-server over a secure communication channel to various client connected to it. On the virtual display, these slugs are de-serialized and used to generate the image through the mock display controller.

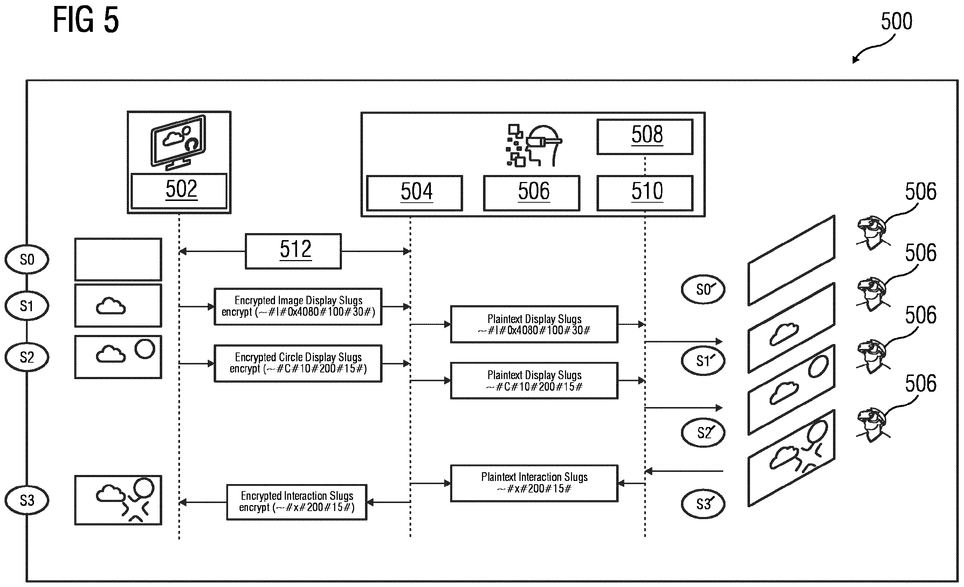

FIG 5 is an exemplary block diagram of an implementation of the system of FIG 1, according to an embodiment of the present invention. The block diagram shown in FIG 5 is a time-sequence diagram comprising a first HMI device server 502, client terminal 504, metaverse user client 506, image library 508, screen instructor 510, and key exchange 512. At time 't0', screen 'S0' is empty i.e. no elements are displayed on the first HMI screen or the local screen. Therefore, at time 't0', screen 'S0'' displayed to the user 506 is empty. At time `t1', screen `S1' has a cloud like element displayed on the screen as communicated by the first HMI device server 502. The HMI server 502 sends a display command to draw cloud like element on the screen at defined coordinates. The display commands are sniffed during the transmission between the HMI server 502 and the display driver of the first HMI screen. The sniffed display commands are then converted into slugs and then encrypted via the key exchange module 512 and then transmitted to the metaverse client 506 via the client terminal 504. The slugs are then decrypted and deserialized at the client terminal 504 for use of the metaverse client 506. The metaverse client 506 interprets the slugs using the image library and draws the cloud like element on virtual HMI screen `S1" using the screen reconstructor at time `t1'. Similarly, at time `t2', screen `S2' has a circle like element displayed on the screen as communicated by the first HMI device server 502. The HMI server 502 sends a display command to draw circle like element on the screen at defined coordinates. The display commands are sniffed during the transmission between the HMI server 502 and the display driver of the first HMI screen. The sniffed display commands are then converted into slugs and then encrypted via the key exchange module 512 and then transmitted to the metaverse client 506 via the client terminal 504. The slugs are then decrypted and deserialized at the client terminal 504 for use of the metaverse client 506. The metaverse client 506 interprets the slugs using the image library and draws the circle like element on virtual HMI screen `S2" using the screen reconstructor at time `t1'. Similarly, at time `t3', an input is received at the virtual HMI screen `S3", the input is then sniffed, encrypted and transmitted to the local HMI server 502. The local HMI server 502 decrypts and de-serializes the input using the key exchange 512. The input is then reflected on the screen `S3'.

Advantageously, the present invention provides a secure and efficient method of mirroring HMI screens from a local HMI device to a virtual HMI device and vice-versa. The present invention enables remote assistance and mirroring of HMI screens in constrained environments. Beneficially, the invention enables sharing HMI screens in real-time to multiple users spread across the world without transmitting image information (pixels or bitmaps) directly but only indirectly by means of a description of the screen content through minimal information like touch co-ordinates, description of shapes and text. Furthermore, the invention allows for remote interactions, i.e. remote users can use the HMI rendered on their computer to directly manipulate the system. Transmitted data is obfuscated because the information contained in there is only meaningful to the sender and the receiver but not for any eaves-dropper and therefore serves as an encryption without need for real cryptography. Moreover, saving these text descriptions referred to as slugs locally on any remote device helps in reconstruction of the workflow (or screens) in a virtual server. Beneficially, slugs by themselves are not decipherable except by the receivers due to the serialization employed further securing the content. Additionally, slugs can be compressed for even low bandwidth applications (eg. BLE, LoRaWAN) or highly responsive applications (Metaverse). It will be appreciated that the result of employing this scheme is the storage demand for user-workflows which otherwise might have demanded a storage of the size that can store videos/photos. This enables, field investigations, remote assistance etc. between local HMls and virtual HMIs. Furthermore, the proposed invention enables screen mirroring on very low-bandwidth connections because only a small of text is exchanged (few bytes per screen). Another major advantage of the invention is that the main embedded device or HMI is not connected directly to internet or an IP network, reducing/preventing cyber threats.

In an exemplary implementation, the present invention enables remote assistance in resource constraint environments. For example, plan operators can perform and complete commissioning process of devices from a remote location within the metaverse. This process provides a lot of advantages over the current process of the commissioning engineers going to customer sites and doing the commissioning on-site. Firstly, it reduces the time to commissioning, as the engineers do not have to go to the site anymore, they can be commissioned from a remote location. Additionally, it also increases the number of commissions that can be performed in a single day as the commissioning engineers now can commission plants from a single remote locations, the number of commissioning per day also increases. Finally, it reduces job fatigue for the engineers, as they can perform commissions from a comfortable location, rather than a hazardous location like a factory floor. Furthermore generally, in the metaverse, very low latency is appreciated. The transmission of an image requires transmission of a lot of bytes. But with the present invention, provided is a way to reconstruct an image from simple slugs, the data to be transmitted for a screen in very less compared to an image of the same size. Because of this, the end user can expect a very low latency between user input and the response from the application, making the experience immersive.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102: first HMI device
- 104: second HMI device
- 106: apparatus
- 108: communication network
- 202: one or more processing units
- 204: memory unit
- 206: module
- 208: sniffing module
- 210: serializing module
- 212: de-serializing module
- 214: encryption module
- 216: decryption module
- 218: transmission module
- 220: storage unit
- 222: database
- 224: input unit
- 226: output unit
- 228: bus
- 300: method for securely mirroring HMI screen from a first HMI device to a second HMI device for remote assistance in a technical installation
- 400: exemplary method workflow illustrating the sniffing technique
- 500: exemplary block diagram of an implementation of the system

## Claims

1. A method for securely mirroring HMI screen from a first HMI device to a second HMI device for remote assistance in a technical installation, the method comprising:
initiating, by a processing unit, a sniffing technique when a display command is sent to a display driver to draw one or more elements on the HMI screen of the first HMI device;
sniffing, by the processing unit, the display commands from the transmission between the display controller and the display driver of the first HMI device;
converting, by the processing unit, the display commands to slugs by serializing the display commands of the first HMI device;
transmitting, by the processing unit, the slugs from the first HMI device to the second HMI device;
de-serializing, by the processing unit, the slugs into display commands for the second HMI device;
displaying the one or more elements in the second HMI device based on the received display commands.

2. The method according to claim 1, wherein transmitting the slugs from the first HMI device to the second device further comprises:
encrypting the slugs at the first HMI device; and
decrypting the slugs at the second HMI device.

3. The method according to any of the claims 1 or 2, wherein the slugs are stored in a memory associated with the first HMI device and/or the second HMI device, wherein the slugs can be de-serialized in order to reconstruct a workflow of the first HMI device at a later point in time.

4. The method according to any of the preceding claims, further comprising detecting an input on the first HMI device from a user; and sniffing and transmitting the input to the second HMI device in real-time.

5. A method according to any of the preceding claims, further comprising sniffing and transmitting one or more inputs on the second HMI device to the first HMI device.

6. The method according to any of the preceding claims, wherein the one or more elements are primitive elements including at least one of: draw a rectangle, draw a circle, draw an image, and draw text at some pixel coordinates

7. The method according to any of the preceding claims, wherein serializing the display commands comprises converting the display commands into a byte stream.

8. The method according to any of the claims 1 to 7, wherein deserializing the slugs comprises converting the slugs into interpretations used as display commands at the second HMI device.

9. The method according to any of the preceding claims, wherein the first HMI device is a physical HMI device, and the second HMI device is a virtual HMI device.

10. An apparatus for securely mirroring HMI screen from a first HMI device to a second HMI device, the apparatus comprising:
one or more processing units; and
a memory communicatively coupled to the one or more processing units, the memory comprising a module stored in the form of machine-readable instructions executable by the one or more processing units, wherein the module is configured to perform the method steps according to claims 1 to 9.

11. A system for securely mirroring HMI screen from a first HMI device to a second HMI device for remote assistance in a technical installation, the system comprising:
a first HMI device;
a second HMI device; and
an apparatus according to claim 10, communicatively coupled to the first HMI device and the second HMI device, wherein the wherein the apparatus is configured for securely mirroring HMI screen from a first HMI device to a second HMI device, according to any of the method claims 1 to 9.

12. A computer-program product, having computer-readable instructions stored therein, that when executed by a processing unit, cause the processing unit to perform method steps according to any of the claims 1 to 9.

13. A computer readable medium on which program code sections of a computer program are saved, the program code sections being loadable into and/or executable in a system to make the system execute the method steps according to any of the claims 1 to 9 when the program code sections are executed in the system.
